# FASCICULE DE BREVET EUROPEEN

(11) **EP 3 909 115 B1**
(45) Date de publication et mention de la délivrance du brevet: **29.04.2026**
(21) Numéro de dépôt: 20705405.7
(22) Date de dépôt: 07.01.2020
(51) Int. Cl.: H02K 1/2791, H02K 7/116, F16H 1/28, H02K 21/22

(54) **ACTIONNEUR ÉLECTRIQUE POUR UN SYSTÈME DE CHAUFFAGE, VENTILATION ET/OU CLIMATISATION**
ELEKTRISCHER STELLANTRIEB FÜR HEIZUNGS-, LÜFTUNGS- UND/ODER KLIMAANLAGE
ELECTRIC ACTUATOR FOR A HEATING, VENTILATION AND/OR AIR CONDITIONING SYSTEM

(30) Priorité: 08.01.2019 FR 1900162
(43) Date de publication de la demande: 17.11.2021
(73) Titulaire: Valeo Electrification, 95892 Cergy Pontoise (FR)
(72) Inventeur: GOMIS, Dione, 78322 Le Mesnil-Saint-Denis Cedex (FR); SECK, Rawane, 78322 Le Mesnil-Saint-Denis Cedex (FR); COLINET, Sébastien, 78322 Le Mesnil-Saint-Denis Cedex (FR)
(74) Mandataire: Valeo Powertrain Systems
(86) Numéro de dépôt international: PCT/FR2020/050014
(87) Numéro de publication internationale: WO 2020/144426

(56) Documents cités:
- DE-A1- 10 300 641
- US-A- 6 104 112

## Description

La présente invention concerne un actionneur électrique pour un système de chauffage, ventilation et/ou climatisation. Une application particulière concerne un système de chauffage, ventilation et/ou climatisation pour véhicule automobile, intégrant un tel actionneur.

La température régnant à l'intérieur de l'habitacle d'un véhicule automobile est gérée par un système de chauffage, ventilation et/ou climatisation. Une telle installation comporte différents échangeurs de chaleur, qui sont traversés par différents flux d'air avant de rejoindre l'habitacle. Ces échangeurs permettent de réchauffer ou de refroidir les différents flux air avant qu'ils soient admis dans l'habitacle. La température est contrôlée en jouant sur le débit des différents flux d'air. Pour cela, l'installation comporte plusieurs volets mobiles permettant d'ajuster le débit de chaque flux d'air. La position de chacun des volets mobiles est contrôlée par un actionneur électrique.

Par actionneur électrique, on entend un actionneur comportant un moteur électrique et un mécanisme d'actionnement entrainé par le moteur électrique. Le mécanisme d'actionnement permet d'adapter le régime de rotation du moteur électrique afin d'ajuster l'effort disponible au niveau de la prise d'entrainement de l' actionneur. Les volets de régulation du débit d'air peuvent être mobiles en rotation. Dans ce cas, le volet est solidaire d'un arbre de rotation et l'actionneur électrique entraine cet arbre de rotation. Autant que possible, l'actionneur électrique doit être peu encombrant afin de faciliter son intégration dans le système de chauffage, ventilation et/ou climatisation.

Il est connu de proposer un actionneur électrique dont le mécanisme d'actionnement comprend un train épicycloïdal, comme déjà été divulgué dans le document DE 103 00 641 A1.

Un tel mécanisme permet d'obtenir un rapport de démultiplication intéressant entre le moteur électrique et la prise d'entrainement de l'actionneur.

Il est également connu de proposer un actionneur électrique possédant un moteur électrique creux, permettant à l'arbre du volet de traverser le moteur. L'encombrement axial de l'actionneur est ainsi particulièrement réduit.

Cette configuration possède toutefois un inconvénient, qui est que la roue motrice, creuse, doit être d'un diamètre suffisant pour permettre le passage de l'arbre du volet. Ainsi, le rapport entre le diamètre de la couronne extérieure du train planétaire et le diamètre de la roue motrice, jouant le rôle de pignon planétaire, est limité. Le rapport de démultiplication réalisable avec une telle configuration peut ainsi ne pas être suffisant pour obtenir des efforts d'actionnement suffisants, ou peut induire un surdimensionnement du moteur électrique pour palier à cette insuffisance. Le cout et l'encombrement du moteur électrique est alors augmenté.

L'invention propose d'améliorer cette situation en proposant une disposition des éléments du mécanisme d'entrainement de l'actionneur permettant d'augmenter le rapport de démultiplication. Il est ainsi possible de fournir un actionneur capable d'actionner des volets offrant une résistance accrue, tout en conservant un encombrement compact.

L'invention**,** comme décrit dans la revendication indépendante 1, propose ainsi un actionneur électrique adapté pour entrainer un élément mobile pour un système de chauffage, ventilation et/ou climatisation pour véhicule automobile, comportant :
- un moteur électrique comprenant :
   un stator,
   un rotor s'étendant selon un axe,
   un pignon rigidement lié au rotor,
- un mécanisme d'entrainement comprenant :
   un porte-satellite,
   au moins un satellite porté par le porte-satellite, le satellite étant adapté pour être entrainé en rotation par le pignon,
   une couronne de sortie adaptée pour être entrainée en rotation par le au moins un satellite,
   une prise d'entrainement rigidement liée à la couronne de sortie et adaptée pour entrainer l'élément mobile,
   la prise d'entrainement étant distante du moteur électrique selon la direction de l'axe du rotor.

Le moteur n'est ainsi pas traversé par l'élément mobile du système de chauffage, ventilation et/ou climatisation. Le moteur électrique peut être dimensionné de façon à optimiser le circuit magnétique, puisqu'il n'est plus nécessaire de prévoir une portion creuse.

Selon un mode de réalisation, le au-moins un satellite est lié en translation et libre en rotation par rapport au porte-satellite.

Selon un mode de réalisation, la prise d'entrainement s'étend selon l'axe de rotation du moteur électrique.

Selon un mode de réalisation préféré de l'actionneur électrique, le pignon rigidement lié au rotor est en vis-à-vis de la prise d'entrainement selon une direction axiale.

Le diamètre du pignon d'entrainement solidaire du rotor peut ainsi être choisi de façon à augmenter le rapport de démultiplication entre le rotor et la prise d'entrainement. En particulier, le diamètre du pignon d'entrainement peut être inférieur au diamètre de la prise d'entrainement.

Selon un mode de réalisation de l'actionneur électrique, la prise d'entrainement comprend un logement agencé pour recevoir une partie saillante de l'élément mobile, le logement étant obturé au moins en partie par un fond.

Selon un mode de réalisation préféré, le pignon rigidement lié au rotor est en vis-à-vis du fond du logement de la prise d'entrainement.

Selon un mode de réalisation préféré, le rotor est externe au stator.

Avantageusement, le au moins un satellite comporte un premier étage d'engrenage et un deuxième étage d'engrenage solidaire du premier étage d'engrenage, les deux étages d'engrenage étant coaxiaux et possédant des diamètres différents.

En variante, le au moins un satellite comporte un premier étage d'engrenage et un deuxième étage d'engrenage solidaire du premier étage d'engrenage, les deux étages d'engrenage étant coaxiaux et possédant des diamètres identiques.

De préférence, les deux étages d'engrenage du au moins un satellite forment un ensemble monobloc.

Selon un mode de réalisation préféré, l'actionneur électrique comporte une couronne extérieure fixe par rapport au stator.

Selon un mode de réalisation préféré, le premier étage d'engrenage est adapté pour engrener avec la couronne extérieure.

Selon un mode de réalisation préféré, le deuxième étage d'engrenage est adapté pour engrener avec la couronne de sortie.

Avantageusement, l'actionneur électrique comporte un boitier logeant le moteur électrique et le mécanisme d'entrainement.

Avantageusement, le boitier est configuré pour être fixé sur le système de chauffage, ventilation et/ou climatisation.

De préférence, le stator est reçu dans une chambre cylindrique possédant un fond fermé.

De préférence encore, le rotor est reçu dans la chambre cylindrique.

Selon l'invention, l'actionneur électrique comporte au moins deux satellites, chaque satellite étant lié en translation et libre en rotation par rapport au porte-satellite.

Selon un mode de réalisation préféré, l'actionneur électrique comporte trois satellites, chaque satellite étant lié en translation et libre en rotation par rapport au porte-satellite.

Cette configuration permet une bonne répartition des efforts internes dans l'actionneur et permet de limiter les efforts sur les dentures des satellites.

Selon un autre mode de réalisation, l'actionneur électrique comporte quatre satellites, chaque satellite étant lié en translation et libre en rotation par rapport au porte-satellite.

Selon l'invention, la prise d'entrainement est disposée radialement entre les axes des satellites.

L'encombrement selon la direction de l'axe de rotation du moteur électrique est ainsi limité.

Selon un mode de réalisation préféré, la prise d'entrainement forme un ensemble monobloc avec la couronne de sortie.

De préférence, la couronne de sortie est moulée.

Avantageusement, la prise d'entrainement est adaptée pour entrainer en rotation un arbre rotatif de l'élément mobile.

La prise d'entrainement possède ainsi une forme complémentaire à la forme de l'extrémité de l'arbre rotation de l'élément mobile. Au montage, il suffit d'insérer l'extrémité de l'arbre dans la prise d'entrainement pour solidariser en rotation les deux pièces.

Selon un mode de réalisation, la prise d'entrainement comporte des cannelures.

Selon un autre mode de réalisation, la prise d'entrainement comporte un pourtour polygonal.

De préférence, la prise d'entrainement comporte un épaulement, un orifice du boitier de l'actionneur entourant l'épaulement.

Cet épaulement permet d'assurer le centrage de la prise d'entrainement dans le boitier de l'actionneur, ainsi que son guidage.

Selon un mode de réalisation, le rotor comporte une paroi cylindrique s'étendant selon un axe et un flasque s'étendant transversalement à l'axe.

Avantageusement, la paroi cylindrique du rotor comporte une face intérieure sur laquelle sont disposés des aimants.

Selon un mode de réalisation, le flasque possède une forme de disque. Le flasque peut être plein ou évidé.

Avantageusement, le pignon solidaire du rotor et les aimants sont situés axialement de part et d'autre du flasque.

Selon un mode de réalisation, le stator comporte des bobines électromagnétiques disposées sur une carte de circuit imprimé.

De préférence, la carte de circuit imprimé est disposée sur le fond de la chambre cylindrique.

Selon un mode de réalisation, le rotor comporte un axe de guidage inséré dans un alésage central du stator.

Le montage du rotor est ainsi simplifié. L'encombrement axial du moteur est réduit.

Selon un mode de réalisation, le stator comporte au moins trois bobines disposées en étoile autour de l'alésage central.

Avantageusement, le rotor est en plastique ou en métal.

Selon un mode de réalisation, chaque satellite est en plastique ou en métal.

Avantageusement, chaque satellite est moulé.

Selon un mode de réalisation préféré, le diamètre du deuxième étage d'engrenage est inférieur au diamètre du premier étage d'engrenage.

La différence de diamètre entre les deux étages d'engrenage conditionne le rapport de démultiplication entre le pignon du moteur électrique et la prise d'entrainement de l'actionneur. Plus les diamètres sont proches, plus le rapport de démultiplication est élevé. Autrement dit, plus la prise d'entrainement tourne lentement, pour une vitesse de rotation donnée du moteur. Un couple d'entrainement élevé peut ainsi être obtenu, ce qui permet de garantir une absence de blocage de l'élément mobile même dans conditions extrêmes d'utilisation.

L'invention concerne également un système de chauffage, ventilation et/ou climatisation pour véhicule automobile, comportant au moins un conduit de circulation d'air et un obturateur mobile configuré pour contrôler un débit d'air dans le conduit, le volet étant configuré pour être entrainé par un actionneur électrique tel que décrit précédemment.

D'autres caractéristiques et avantages de l'invention apparaîtront à la lecture de la description détaillée des modes de réalisation donnée à titre d'exemples non limitatifs, accompagnée des figures ci-dessous :
La figure 1 représente une vue générale, en perspective, d'un actionneur électrique selon l'invention,
La figure 2 représente une vue en coupe de l'actionneur de la figure 1,
La figure 3 représente une première vue en coupe de l'actionneur, illustrant le mécanisme d'entrainement,
La figure 4 représente une deuxième vue en coupe de l'actionneur, illustrant le mécanisme d'entrainement,
La figure 5 représente une vue partielle, en perspective, du stator du moteur électrique de l'actionneur,
La figure 6 représente une première vue en perspective du rotor du moteur électrique de l'actionneur,
La figure 7 représente une deuxième vue en perspective du rotor du moteur électrique de l'actionneur.

Afin de faciliter la lecture des figures, les différents éléments ne sont pas nécessairement représentés à l'échelle.

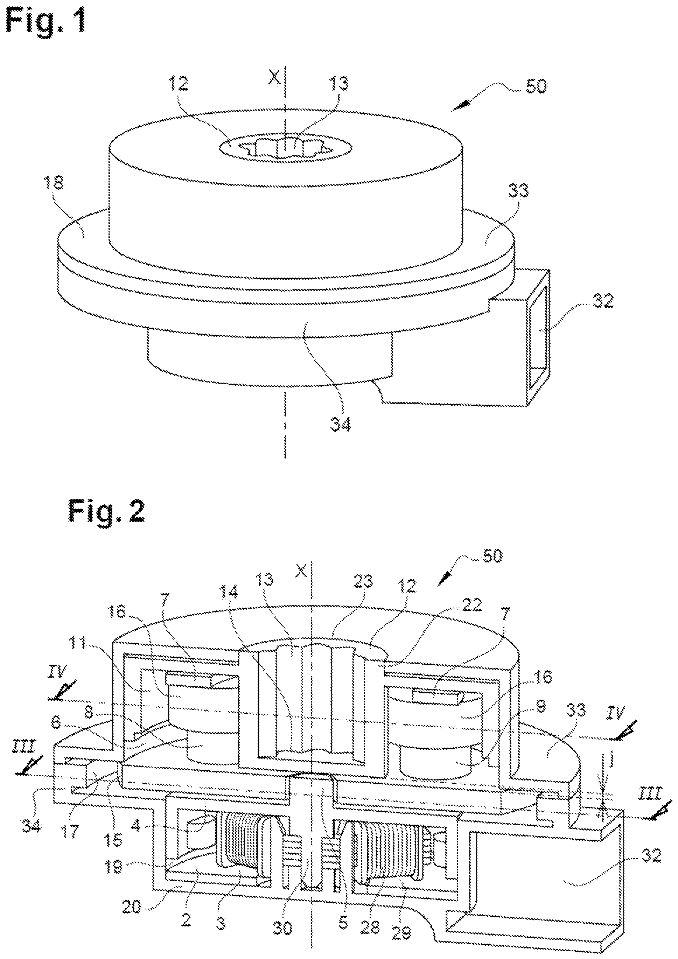

On a représenté sur la figure 1 un actionneur électrique 50 adapté pour entrainer un élément mobile pour un système de chauffage, ventilation et/ou climatisation pour véhicule automobile. L'élément mobile est par exemple un volet rotatif permettant de répartir le débit respectif de deux flux d'air se mélangeant. Il est ainsi possible de contrôler, c'est-à-dire d'ajuster à une valeur souhaitée, la température de l'habitacle. En effet, l'ajustement de la position du volet permet d'ajuster la répartition entre l'air chaud et l'air froid produit par le système de chauffage, ventilation et/ou climatisation.

Le volet peut être un volet rotatif monté sur un arbre. L'arbre est entrainé en rotation par l'actionneur électrique 50. Une unité électronique de contrôle, non représentée, contrôle la position du volet mobile en pilotant le courant électrique alimentant l'actionneur 50. Le système de chauffage, ventilation et/ou climatisation, bien connu, n'a pas été représenté.

La figure 1 représente une vue générale de l'actionneur électrique 50. L'actionneur électrique 50 comporte un boitier 18 logeant le moteur électrique 2 et le mécanisme d'entrainement 6. Le boitier 18 est configuré pour être fixé sur le système de chauffage, ventilation et/ou climatisation. Pour cela, le boitier 18 comporte des pattes de fixation, non représentées, pouvant être traversées par des vis entrant dans des trous taraudés du système de chauffage, ventilation et/ou climatisation. L'actionneur 50 est ainsi fixé au système de chauffage, ventilation et/ou climatisation. Le boitier 18 comprend une coque supérieure 33 et une coque inférieure 34. Les deux coques 33, 34 sont solidarisées, par exemple par soudure.

L'actionneur électrique 50, qui est détaillé sur la figure 2, comporte :
- un moteur électrique 2 comprenant :
   un stator 3,
   un rotor 4 s'étendant selon un axe X,
   un pignon 5 rigidement lié au rotor 4,
- un mécanisme d'entrainement 6 comprenant :
   un porte-satellite 7
   au moins un satellite 8 porté par le porte-satellite 7, le satellite 8 étant adapté pour être entrainé en rotation par le pignon 5,
   une couronne de sortie 11 adaptée pour être entrainée en rotation par le au moins un satellite 8,
   une prise d'entrainement 12 rigidement liée à la couronne de sortie 11 et adaptée pour entrainer l'élément mobile 1,
   la prise d'entrainement 12 étant distante du moteur électrique 2 selon la direction de l'axe X du rotor 4.

Autrement dit, il existe un jeu axial, noté j sur la figure 2, entre le moteur électrique 2 et la prise d'entrainement 12.

Le moteur électrique 2 n'est ainsi pas traversé par l'élément mobile du système de chauffage, ventilation et/ou climatisation. Le moteur électrique 2 peut être dimensionné de façon à optimiser le circuit magnétique, puisqu'il n'est plus nécessaire de prévoir une portion creuse dans le rotor et le stator, permettant le passage de l'arbre de l'élément mobile.

Le moteur électrique 2 s'étend selon un axe X. La prise d'entrainement 12 s'étend selon l'axe X de rotation du moteur électrique 2. Le pignon 5 rigidement lié au rotor 4 est en vis-à-vis de la prise d'entrainement 12 selon une direction axiale.

La prise d'entrainement 12 comprend un logement 13 agencé pour recevoir une partie saillante de l'élément mobile. Le logement 13 est obturé au moins en partie par un fond 14. Le pignon 5 rigidement lié au rotor 4 est en vis-à-vis du fond 14 du logement 13 de la prise d'entrainement 12. Un jeu est présent, selon la direction de l'axe X, entre le pignon 5 et le fond 14. Ce jeu est noté j sur la figure 2.

Grâce à cette disposition, le diamètre du pignon d'entrainement 5 solidaire du rotor 4 peut être choisi de façon à augmenter le rapport de démultiplication entre le rotor 4 et la prise d'entrainement 12. En particulier, le diamètre du pignon d'entrainement 5 peut être choisi inférieur au diamètre de la prise d'entrainement 12, ce qui favorise l'obtention d'un rapport de démultiplication élevé.

Le rotor 4 est ici externe au stator 3. Autrement dit, le stator 4 est situé au centre du moteur électrique 2. Le rotor 4 entoure le stator 3.

Le mécanisme d'entrainement 6 de l'actionneur électrique 50 comprend un train épicycloïdal. Le pignon 5 constitue le pignon satellite du train épicycloïdal, qui entraine les autres éléments du train épicycloïdal. Le pignon 5 engrène avec le au-moins un satellite 8, qui est lié en translation et libre en rotation par rapport au porte-satellite 7. Avantageusement, l'actionneur électrique comporte au moins deux satellites 8,9, chaque satellite 8,9 étant lié en translation et libre en rotation par rapport au porte-satellite 7.

Dans l'exemple décrit ici, l'actionneur électrique 50 comporte trois satellites 8,9,10, chaque satellite 8,9,10 étant lié en translation et libre en rotation par rapport au porte-satellite 7. La configuration avec trois satellites permet une bonne répartition des efforts internes dans l'actionneur et permet de limiter les efforts sur les dentures des satellites 8, 9, 10. Chaque satellite possède un axe de rotation. Les axes de rotation sont parallèles.

L'actionneur électrique 50 comporte aussi une couronne extérieure 17 fixe par rapport au stator 3. La couronne extérieure 17 possède une denture intérieure. La denture n'est pas représentée sur la figure 2. Le au moins un satellite 8 comporte un premier étage d'engrenage 15 et un deuxième étage d'engrenage 16 solidaire du premier étage d'engrenage 15, les deux étages d'engrenage 15,16 étant coaxiaux et possédant des diamètres D1, D2 différents.

Dans le cas ici décrit où le mécanisme d'entrainement 6 comporte plusieurs satellites, chaque satellite 8,9,10 comporte un premier étage d'engrenage 15 et un deuxième étage d'engrenage 16 solidaire du premier étage d'engrenage 15, les deux étages d'engrenage 15,16 étant coaxiaux et possédant des diamètres D1, D2 différents.

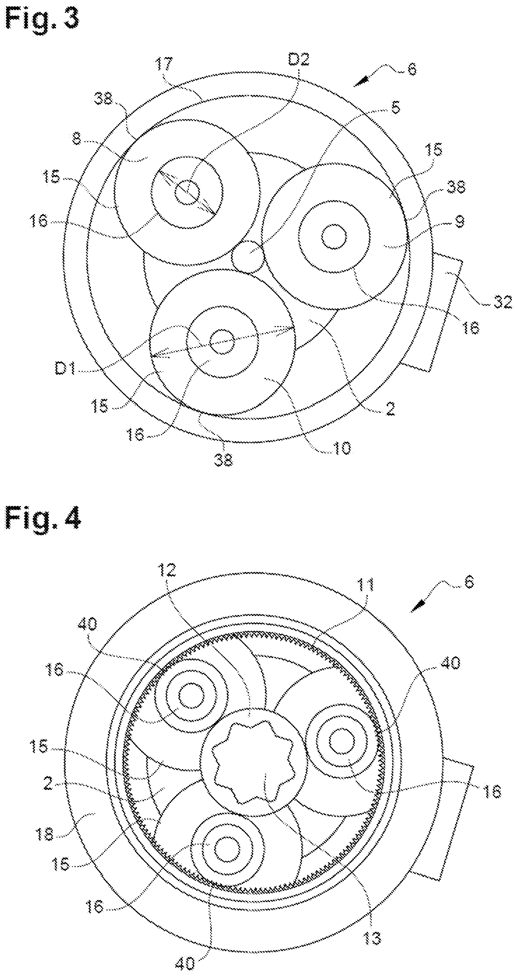

Les figures 3 et 4 détaillent les éléments du mécanisme d'entrainement 6, et en particulier du train épicycloïdal. Sur ces figures, dans un but de simplification le porte-satellite n'a pas été représenté. De manière bien connue, le porte-satellite maintient les satellites fixes en translation les uns par rapport aux autres, et permet leur libre rotation autour de leur axe respectif. Chaque satellite 8, 9, 10 engrène avec la denture de la couronne extérieure 17.

Plus précisément, le premier étage d'engrenage 15 est adapté pour engrener avec la couronne extérieure 17. La couronne 17 étant fixe, le mouvement de rotation du pignon 5 du moteur électrique 2 fait tourner le porte satellite 7 autour de l'axe X. Le point 38, sur la figure 3, schématise le point de contact entre le premier étage de satellite 15 et la couronne extérieure 17. Le deuxième étage d'engrenage 16 est adapté pour engrener avec la couronne de sortie 11. La couronne de sortie 11 possède une denture intérieure.

Comme les deux étages d'engrenage 15, 16 du au-moins un satellite ont des diamètres différents, la vitesse du point de contact entre la couronne de sortie 11 et le deuxième étage d'engrenage 16 est non nulle. Le point 40, sur la figure 4, schématise le point de contact entre le deuxième étage de satellite 16 et la couronne de sortie 11. La couronne de sortie 11 est ainsi animée d'un mouvement de rotation lorsque le pignon 5 tourne.

La couronne de sortie **11** possède une prise d'entrainement 12. Plus précisément, la prise d'entrainement 12 forme ici un ensemble monobloc avec la couronne de sortie **11.** La couronne de sortie **11** est moulée. Le corps de la couronne de sortie **11,** la denture et la prise d'entrainement font partie de la même pièce obtenue par moulage.

Le diamètre D2 du deuxième étage d'engrenage 16 est ici inférieur au diamètre D1 du premier étage d'engrenage 15. La couronne de sortie **11** a ainsi le même sens de rotation que le pignon 5. Cette disposition permet également de diminuer l'encombrement radial de l'actionneur au niveau de la prise d'entrainement 12.

La différence de diamètre D1, D2 entre les deux étages d'engrenage 15, 16 conditionne le rapport de démultiplication entre le pignon 5 du moteur électrique et la prise d'entrainement 12 de l'actionneur 50. Plus les diamètres D1, D2 ont des valeurs proches, plus le rapport de démultiplication est élevé. Autrement dit, plus la prise d'entrainement 12 tourne lentement, pour une vitesse de rotation donnée du moteur électrique. Un couple d'entrainement élevé peut ainsi être obtenu, ce qui permet de garantir une absence de blocage de l'élément mobile même dans conditions extrêmes d'utilisation. Sur les figures 3 et 4, l'écart entre le diamètre D1 et le diamètre D2 a été exagéré.

Dans l'exemple illustré, les deux étages d'engrenage 15,16 du au moins un satellite forment un ensemble monobloc. Chaque satellite 8,9,10 est moulé. Chaque satellite 8,9,10 est en plastique. Chaque satellite 8,9,10 peut également être en métal.

Comme on peut le voir sur la figure 2, la prise d'entrainement 12 est disposée radialement entre les axes des satellites 8,9,10. L'encombrement selon la direction de l'axe de rotation X du moteur électrique est ainsi limité. L'intégration de l'actionneur est facilitée, ce qui permet d'utiliser le même actionneur pour une large gamme d'applications.

La prise d'entrainement 12 est adaptée pour entrainer en rotation un arbre rotatif de l'élément mobile. La prise d'entrainement 12 possède ainsi une forme complémentaire à la forme de l'extrémité de l'arbre de rotation de l'élément mobile. Au montage, il suffit d'insérer l'extrémité de l'arbre dans la prise d'entrainement 12 pour solidariser en rotation les deux pièces. Comme on peut le voir sur les figures 1 et 2, la prise d'entrainement 12 comporte un pourtour polygonal.

La prise d'entrainement 12 comporte un épaulement 22, un orifice 23 du boitier 18 de l'actionneur 50 entourant l'épaulement 22. Cet épaulement permet d'assurer le centrage de la prise d'entrainement 12 dans le boitier 18 de l'actionneur 50.

Le stator 3 est reçu dans une chambre cylindrique 19 possédant un fond fermé 20. De même, le rotor 4 est reçu dans la chambre cylindrique 19. La chambre cylindrique 19 fait partie de la coque inférieure 34.

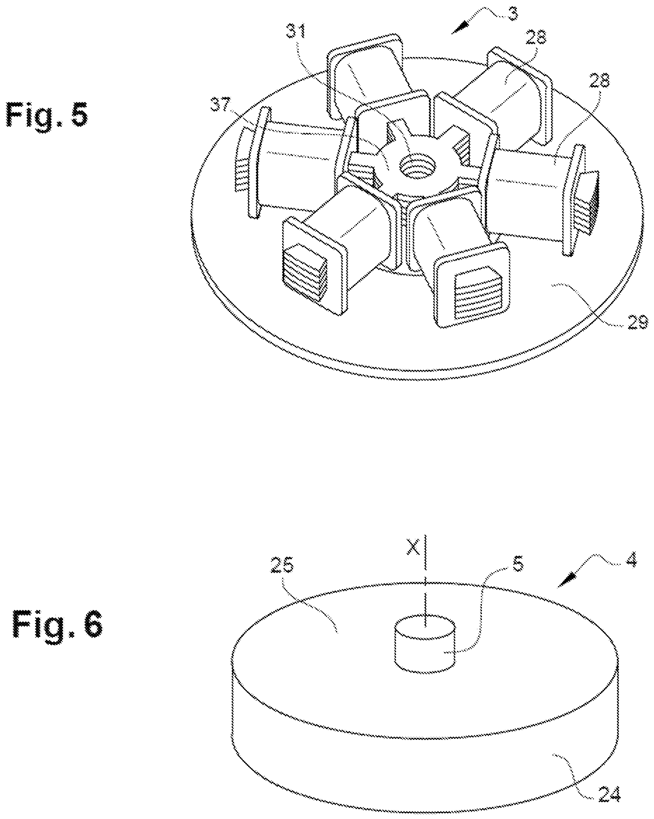

La figure 5 détaille le stator 3. Le stator 3 comporte des bobines électromagnétiques 28 disposées sur une carte de circuit imprimé 29. Le courant électrique passant dans les bobines électromagnétiques 28 génère un champ magnétique qui permet de faire tourner le rotor 4. La carte de circuit imprimé 29 est disposée sur le fond 20 de la chambre cylindrique 19.

L'actionneur 50 comprend un connecteur 32. Les pattes de connexion du connecteur 32, non représentées, permettent de commander le passage du courant électrique dans les bobines du stator 3 afin de créer le champ magnétique avec lequel les aimants permanents 27 du rotor 4 interagissent.

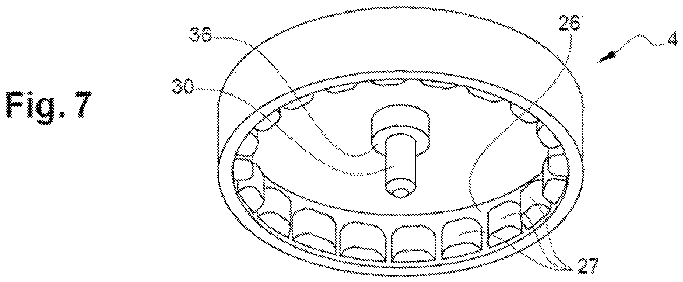

Les figures 6 et 7 détaillent le rotor 4. Le rotor 4 comporte une paroi cylindrique 24 s'étendant selon un axe X et un flasque 25 s'étendant transversalement à l'axe X. La paroi cylindrique 24 du rotor 4 comporte une face intérieure 26 sur laquelle sont disposés des aimants 27. Les aimants permanents 27 peuvent par exemple être collés sur la face intérieure 26 du rotor 4. Les aimants permanents 27 peuvent également être surmoulés de façon à être incorporés dans la matière du rotor 4. Le flasque 25 possède une forme de disque. Le pignon 5 solidaire du rotor 4 et les aimants 27 sont situés axialement de part et d'autre du flasque 25.

Le rotor 4 comporte un axe de guidage 30 inséré dans un alésage central 31 du stator 3. L'alésage central 31 est réalisé dans le paquet de tôles compris dans le circuit magnétique du stator 3. L'axe de guidage 30 comporte un épaulement 36 venant en butée sur la périphérie 37 de l'alésage central 31 du stator 3. Le montage du rotor 4 dans le stator 3 est ainsi simplifié. L'encombrement axial du moteur électrique 2 est réduit. Le rotor 4 peut être en plastique ou en métal. Le stator 3 comporte au moins trois bobines 28 disposées en étoile autour de l'alésage central 31. Dans l'exemple illustré sur la figure 5, le stator comporte 6 bobines 28.

L'invention concerne également un système de chauffage, ventilation et/ou climatisation pour véhicule automobile, comportant au moins un conduit de circulation d'air et un obturateur mobile configuré pour contrôler un débit d'air dans le conduit, le volet étant configuré pour être entrainé par un actionneur électrique tel que décrit précédemment.

La disposition particulière du moteur électrique 2 et du mécanisme d'entrainement 6 permet d'obtenir un actionneur au circuit magnétique optimisé, tout en restant compact. La compacité de l'actionneur électrique 50 permet son intégration facile dans le système de chauffage, ventilation et/ou climatisation. De plus, le rapport de démultiplication élevé obtenu permet d'obtenir des efforts importants en utilisant des moteurs de petite dimensions. Ceci permet de limiter le cout du moteur électrique, et par conséquent de l'actionneur.

Le système de chauffage, ventilation et/ou climatisation comprend généralement plusieurs actionneurs électriques tel que précédemment décrit, chaque actionneur gérant la position d'un volet distinct.

Selon des modes de réalisation non représentés, le moteur électrique, ainsi que l'actionneur intégrant ce moteur électrique peuvent également comprendre une ou plusieurs des caractéristiques ci-dessous, considérées individuellement ou combinées entre elles :
La prise d'entrainement 12 peut comporter des cannelures,

Le fond 14 du logement 13 de la prise d'entrainement 12 peut comprendre un ou des ouvertures,

Le au moins un satellite comporte un premier étage d'engrenage et un deuxième étage d'engrenage solidaire du premier étage d'engrenage, les deux étages d'engrenage étant coaxiaux, et peuvent posséder des diamètres identiques, L'actionneur électrique peut comporter quatre satellites, chaque satellite étant lié en translation et libre en rotation par rapport au porte-satellite.

L'invention est définie par les revendications ci-jointes.

## Revendications

1. Actionneur électrique (50) adapté pour entrainer un élément mobile pour un système de chauffage, ventilation et/ou climatisation pour véhicule automobile, comportant:
a. un moteur électrique (2) comprenant :
i. un stator (3),
ii. un rotor (4) s'étendant selon un axe (X),
iii. un pignon (5) rigidement lié au rotor (4),
b. un mécanisme d'entrainement (6) comprenant :
i. un porte-satellite (7)
ii. au moins un satellite (8) porté par le porte-satellite (7), le satellite (8) étant adapté pour être entrainé en rotation par le pignon (5),
iii. une couronne de sortie (11) adaptée pour être entrainée en rotation par le au moins un satellite (8),
iv. une prise d'entrainement (12) rigidement liée à la couronne de sortie (11) et adaptée pour entrainer l'élément mobile,
v. la prise d'entrainement (12) étant distante du moteur électrique (2) selon la direction de l'axe (X) du rotor (4),
l'actionneur électrique (50) comportant au moins deux satellites (8,9), chaque satellite (8,9) étant lié en translation et libre en rotation par rapport au porte-satellite (7),
**caractérisé en ce que** la prise d'entrainement (12) est disposée radialement entre les axes des satellites (8,9).

2. Actionneur électrique selon la revendication 1, dans lequel le pignon (5) rigidement lié au rotor (4) est en vis-à-vis de la prise d'entrainement (12) selon une direction axiale.

3. Actionneur électrique selon la revendication 1 ou 2, dans lequel la prise d'entrainement (12) comprend un logement (13) agencé pour recevoir une partie saillante de l'élément mobile, le logement (13) étant obturé au moins en partie par un fond (14),et dans lequel le pignon (5) rigidement lié au rotor (4) est en vis-à-vis du fond (14) du logement (13) de la prise d'entrainement (12).

4. Actionneur électrique selon l'une des revendications précédentes, dans lequel le rotor (4) est externe au stator (3).

5. Actionneur électrique selon l'une des revendications précédentes, dans lequel le au moins un satellite (8) comporte un premier étage d'engrenage (15) et un deuxième étage d'engrenage (16) solidaire du premier étage d'engrenage (15), les deux étages d'engrenage (15,16) étant coaxiaux et possédant des diamètres (D1, D2) différents.

6. Actionneur électrique selon la revendication 5, comportant une couronne extérieure (17) fixe par rapport au stator (3), dans lequel le premier étage d'engrenage (15) est adapté pour engrener avec la couronne extérieure (17), et dans lequel le deuxième étage d'engrenage (16) est adapté pour engrener avec la couronne de sortie (11).

7. Actionneur électrique selon l'une des revendications précédentes, dans lequel le rotor (4) comporte une paroi cylindrique (24) s'étendant selon un axe (X) et un flasque (25) s'étendant transversalement à l'axe (X).

8. Actionneur électrique selon la revendication 7, dans lequel la paroi cylindrique (24) du rotor (4) comporte une face intérieure (26) sur laquelle sont disposés des aimants (27), dans lequel le flasque (25) possède une forme de disque, et dans lequel le pignon (5) solidaire du rotor (4) et les aimants (27) sont situés axialement de part et d'autre du flasque (25).

9. Système de chauffage, ventilation et/ou climatisation pour véhicule automobile, comportant au moins un conduit de circulation d'air et un obturateur mobile configuré pour contrôler un débit d'air dans le conduit, le volet étant configuré pour être entrainé par un actionneur électrique selon l'une des revendications précédentes.

## Patentansprüche

1. Elektrischer Aktuator (50), der zum Antrieb eines beweglichen Elements für ein Heizungs-, Lüftungs- und/oder Klimatisierungssystem für Kraftfahrzeuge geeignet ist, umfassend:
a. einen Elektromotor (2), der umfasst:
i. einen Stator (3),
ii. einen Rotor (4), der sich entlang einer Achse (X) erstreckt,
iii. ein Ritzel (5), das starr mit dem Rotor (4) verbunden ist,
b. einen Antriebsmechanismus (6), der umfasst:
i. einen Planetenträger (7)
ii. mindestens einen Planeten (8), der vom Planetenträger (7) getragen wird, wobei der Planet (8) dazu ausgelegt ist, durch das Ritzel (5) in Rotation versetzt zu werden,
iii. einen Ausgangskranz (11), der dazu ausgelegt ist, durch den mindestens einen Planeten (8) in Rotation versetzt zu werden,
iv. einen Antriebsanschluss (12), der starr mit dem Ausgangskranz (11) verbunden ist und dazu ausgelegt ist, das bewegliche Element anzutreiben,
v. wobei der Antriebsanschluss (12) vom Elektromotor (2) in Richtung der Achse (X) des Rotors (4) beabstandet ist,
wobei der elektrische Aktuator (50) mindestens zwei Planeten (8,9) umfasst, wobei jeder Planet (8,9) translatorisch verbunden und rotatorisch frei in Bezug auf den Planetenträger (7) ist, **dadurch gekennzeichnet, dass** der Antriebsanschluss (12) radial zwischen den Achsen der Planeten (8,9) angeordnet ist.

2. Elektrischer Aktuator nach Anspruch 1, bei dem das mit dem Rotor (4) starr verbundene Ritzel (5) dem Antriebsanschluss (12) in axialer Richtung gegenüberliegt.

3. Elektrischer Aktuator nach Anspruch 1 oder 2, bei dem der Antriebsanschluss (12) eine Aufnahme (13) umfasst, die zur Aufnahme eines vorstehenden Teils des beweglichen Elements ausgebildet ist, wobei die Aufnahme (13) zumindest teilweise durch einen Boden (14) verschlossen ist, und wobei das mit dem Rotor (4) starr verbundene Ritzel (5) dem Boden (14) der Aufnahme (13) des Antriebsanschlusses (12) gegenüberliegt.

4. Elektrischer Aktuator nach einem der vorhergehenden Ansprüche, bei dem der Rotor (4) außerhalb des Stators (3) angeordnet ist.

5. Elektrischer Aktuator nach einem der vorhergehenden Ansprüche, bei dem der mindestens eine Planet (8) eine erste Getriebestufe (15) und eine zweite Getriebestufe (16) umfasst, die mit der ersten Getriebestufe (15) fest verbunden ist, wobei die beiden Getriebestufen (15,16) koaxial sind und unterschiedliche Durchmesser (D1, D2) aufweisen.

6. Elektrischer Aktuator nach Anspruch 5, umfassend einen äußeren Kranz (17), der in Bezug auf den Stator (3) fest ist, wobei die erste Getriebestufe (15) dazu ausgelegt ist, mit dem äußeren Kranz (17) in Eingriff zu kommen, und wobei die zweite Getriebestufe (16) dazu ausgelegt ist, mit dem Ausgangskranz (11) in Eingriff zu kommen.

7. Elektrischer Aktuator nach einem der vorhergehenden Ansprüche, bei dem der Rotor (4) eine zylindrische Wand (24), die sich entlang einer Achse (X) erstreckt, und einen Flansch (25) umfasst, der sich quer zur Achse (X) erstreckt.

8. Elektrischer Aktuator nach Anspruch 7, bei dem die zylindrische Wand (24) des Rotors (4) eine Innenfläche (26) aufweist, auf der Magnete (27) angeordnet sind, wobei der Flansch (25) eine Scheibenform aufweist, und wobei das mit dem Rotor (4) fest verbundene Ritzel (5) und die Magnete (27) axial auf gegenüberliegenden Seiten des Flansches (25) angeordnet sind.

9. Heizungs-, Lüftungs- und/oder Klimatisierungssystem für Kraftfahrzeuge, umfassend mindestens einen Luftströmungskanal und einen beweglichen Verschluss, der zum Steuern eines Luftstroms in dem Kanal konfiguriert ist, wobei die Klappe so konfiguriert ist, dass sie von einem elektrischen Aktuator nach einem der vorhergehenden Ansprüche angetrieben wird.

## Claims

1. Electric actuator (50) adapted to drive a mobile element for a heating, ventilation and/or air conditioning system for a motor vehicle, comprising:
a. an electric motor (2) comprising:
i. a stator (3),
ii. a rotor (4) extending along an axis (X),
iii. a pinion (5) rigidly connected to the rotor (4),
b. a drive mechanism (6) comprising:
i. a planet carrier (7)
ii. at least one planet gear (8) carried by the planet carrier (7), the planet gear (8) being adapted to be driven in rotation by the pinion (5),
iii. an output crown wheel (11) adapted to be driven in rotation by the at least one planet gear (8),
iv. a drive connection (12) rigidly connected to the output crown wheel (11) and adapted to drive the mobile element,
v. the drive connection (12) being distant from the electric motor (2) along the direction of the axis (X) of the rotor (4),
the electric actuator (50) comprising at least two planet gears (8,9), each planet gear (8,9) being linked in translation and free in rotation with respect to the planet carrier (7), **characterized in that** the drive connection (12) is arranged radially between the axes of the planet gears (8,9).

2. Electric actuator according to claim 1, wherein the pinion (5) rigidly connected to the rotor (4) is opposite the drive connection (12) along an axial direction.

3. Electric actuator according to claim 1 or 2, wherein the drive connection (12) comprises a housing (13) arranged to receive a protruding part of the mobile element, the housing (13) being at least partially closed by a bottom (14), and wherein the pinion (5) rigidly connected to the rotor (4) is opposite the bottom (14) of the housing (13) of the drive connection (12).

4. Electric actuator according to any one of the preceding claims, wherein the rotor (4) is external to the stator (3).

5. Electric actuator according to any one of the preceding claims, wherein the at least one planet gear (8) comprises a first gear stage (15) and a second gear stage (16) integral with the first gear stage (15), the two gear stages (15,16) being coaxial and having different diameters (D1, D2).

6. Electric actuator according to claim 5, comprising an outer crown wheel (17) fixed relative to the stator (3), wherein the first gear stage (15) is adapted to mesh with the outer crown wheel (17), and wherein the second gear stage (16) is adapted to mesh with the output crown wheel (11).

7. Electric actuator according to any one of the preceding claims, wherein the rotor (4) comprises a cylindrical wall (24) extending along an axis (X) and a flange (25) extending transversely to the axis (X).

8. Electric actuator according to claim 7, wherein the cylindrical wall (24) of the rotor (4) comprises an inner face (26) on which magnets (27) are arranged, wherein the flange (25) has a disc shape, and wherein the pinion (5) integral with the rotor (4) and the magnets (27) are located axially on either side of the flange (25).

9. Heating, ventilation and/or air conditioning system for a motor vehicle, comprising at least one air circulation duct and a mobile shutter configured to control an air flow in the duct, the flap being configured to be driven by an electric actuator according to any one of the preceding claims.
